# EUROPÄISCHE PATENTSCHRIFT

(11) **EP 3 942 919 B1**
(45) Veröffentlichungstag und Bekanntmachung des Hinweises auf die Patenterteilung: **01.01.2025**
(21) Anmeldenummer: 21185323.9
(22) Anmeldetag: 13.07.2021
(51) Int. Cl.: A01D 41/14, A01D 43/08, A01D 45/02

(54) **SCHNEIDVORRICHTUNG**
CUTTING DEVICE
DISPOSITIF DE COUPE

(30) Priorität: 22.07.2020 DE 102020119368
(43) Veröffentlichungstag der Anmeldung: 26.01.2022
(73) Patentinhaber: Maschinenfabrik Bernard Krone GmbH & Co. KG, 48480 Spelle (DE)
(72) Erfinder: FOCKS, TOBIAS, 48480 Spelle (DE); Ester, Markus, 49832 Beesten (DE); Bolsmann, Martin, 49832 Andervenne (DE); Ahlmer, Frank, 49492 Westerkappeln (DE)

(56) Entgegenhaltungen:
- EP-B1- 3 130 214
- DE-A1- 19 639 805
- DE-A1- 4 109 064
- DE-C1- 10 103 595

## Beschreibung

Die Erfindung betrifft eine Schneidvorrichtung, die zum Schneiden landwirtschaftlicher Nutzpflanzen durch eine Drehbewegung um eine Schneiddrehachse ausgebildet ist. Die Schneidvorrichtung umfasst zumindest ein Messerelement. Das Messerelement ist in einer Draufsicht auf eine Oberseite der Schneidvorrichtung in eine Umlaufrichtung geöffnet ausgebildet.

Eine derartige Schneidvorrichtung ist bekannt aus der EP 3 130 214 B1. Die bekannte Schneidvorrichtung ist für ihren Betrieb an einer Erntemaschine zu montieren bzw. Teil davon. Im Betrieb rotiert die Schneidvorrichtung um die Schneidrehachse und wird in eine zur Schneiddrehachse angewinkelte Fortbewegungsrichtung auf die zu schneidenden Nutzpflanzen zubewegt. Dabei durchschneidet das zumindest eine Messerelement die Nutzpflanzen.

Nachteilig bei der bekannten Schneidvorrichtung ist, dass sich die geschnittenen Nutzpflanzen bei größeren Fortbewegungsgeschwindigkeiten auf der Oberseite der Schneidvorrichtung stauen und je nach Erntebedingungen in Fortbewegungsrichtung von der Schneidvorrichtung auf den Ackerboden fallen, was Ernteverluste verursacht.

Weiterhin haben solche Schneidvorrichtungen einen hohen Querschnitt, damit sie ein ausreichendes Widerstandsmoment aufweisen, um sich im Betrieb nicht zu verformen. Das Verformen könnte dazu führen, dass sich benachbarte Schneidvorrichtungen berühren und gegenseitig zerstören. Aufgrund des hohen Querschnitts ist das Gewicht solcher Schneidvorrichtungen jedoch hoch, was einen verhältnismäßig hohen Verschleiß und auch bezüglich des Kraftstoffverbrauchs hohe Kosten verursacht.

Die Druckschrift DE 101 03 595 C1 offenbart eine Schneid- und Fördervorrichtung mit einer Schneidscheibe und einer darüber in koaxialer Ausrichtung zu dieser angeordneten Förderscheibe und am äußeren Umfang der unteren Förderscheibe gleichmäßig verteilten und den Außendurchmesser der Schneidscheibe überragenden Förderzinken, die als Greifschneiden ausgebildet sind.

Die Druckschrift DE 196 39 805 A1 offenbart eine Mäh- und Fördervorrichtung mit einer rotierenden, am Umfang mit Messern versehenen Schneidscheibe und darüber angeordneten, am Umfang mit Förderzinken und dazwischenliegenden Ausbuchtungen ausgestatteten Förderscheiben.

Die Druckschrift DE 41 09 064 A1 offenbart ein Maiserntegerät mit um etwa senkrechte Achsen umlaufenden, frei schneidenden Mähwerkzeugen und dazu gleichachsig umlaufenden Fördertrommeln oder dergleichen, wobei am Umfang der Mähwerkzeuge mehrere Schneidkanten angeordnet sind, die ihren Radius, entgegen der Drehrichtung gesehen, etwa zykloidförmig vergrößern.

Aufgabe der vorliegenden Erfindung ist die Bereitstellung einer gattungsgemäßen Schneidvorrichtung sowie eines Erntevorsatzes und eines Feldhäckslers jeweils mit der Schneidvorrichtung, welche die vorbeschriebenen Nachteile vermeidet.

Erfindungsgemäß wird die Aufgabe durch eine gattungsgemäße Schneidvorrichtung gelöst, die zumindest ein zumindest an der Oberseite angeordnetes und relativ zum Messerelement ortsfestes Radialförderelement aufweist. Das Radialförderelement ist zumindest abschnittsweise zu einer Förderung der Nutzpflanzen in eine Förderrichtung ausgebildet. Die Förderrichtung ist relativ zur Schneidrehachse anteilig tangential und anteilig radial zur Schneiddrehachse ausgerichtet. Die Förderrichtung ist insbesondere eine Resultierende aus einem tangential in die Umlaufrichtung gerichteten Förderrichtungsanteil und einem radial der Schneiddrehachse zugewandten Förderrichtungsanteil.

Die Schneidvorrichtung zeichnet sich dadurch aus, dass das Radialförderelement ausgehend von zumindest einem Bereich mittlerer Höhe der Schneidvorrichtung ein gesickter Bereich der Schneidvorrichtung ist.

Die Schneidvorrichtung ist insbesondere als Schneidscheibe oder als Schneidscheibensegment ausgebildet. Als Schneidscheibe hat die Schneidvorrichtung bevorzugt eine Bohrung, durch die die Schneiddrehachse hindurch verläuft und im Bereich derer die Schneidvorrichtung an einer Trag- bzw. Antriebsvorrichtung zu befestigen ist. Als Schneidscheibensegment ist die Schneidvorrichtung in der Draufsicht insbesondere durch zwei ungeachtet des Messerelementes im Wesentlichen in Umlaufrichtung verlaufende Konturen sowie zwei in radialer Richtung verlaufende Konturen umgrenzt. Die Schneidvorrichtung ist vorzugsweise einstückig ausgebildet.

Die Schneidvorrichtung weist bevorzugt eine Mehrzahl von Messerelementen auf, die sich entlang eines Außenumfangs der Schneidvorrichtung bzw. in Umlaufrichtung aneinander anschließen. Das zumindest eine Messerelement bildet insbesondere eine Schneide aus. Aufgrund einer bevorzugten abschnittsweisen Sichelform läuft das Messerelement bevorzugt in Umlaufrichtung bzw. in tangentialer Richtung spitz zu. Eine rechtwinklig zu zumindest einem Teil der Schneide orientierte Schneidenorthogonale verläuft bevorzugt ausgehend von der Schneide von dem Messerelement weg und anteilig auf die Schneidrehachse zu. Die Schneide erstreckt sich mit wachsendem Radius in die Umlaufrichtung. Durch diese Ausbildung des Messerelements bzw. der Schneide wird verhindert, dass die geschnittenen Nutzpflanzen von der Schneidvorrichtung in die Fortbewegungsrichtung abgestoßen werden. Die bevorzugte Sichelform sorgt dafür, dass eine Druckkraft auf die Nutzpflanze beim Schneiden derer anteilig entgegen der Fortbewegungsrichtung wirkt. Dadurch gelangen die Nutzpflanzen erst zuverlässig auf die Oberseite und damit in den Wirkbereich des Radialförderelementes. Möglich ist es auch, dass die Schneidvorrichtung aus zahnförmigen Messerelementen gebildet ist, welche einen konstanten Winkel zur Radialen aufweisen.

Das Radialförderelement ist insofern an der Oberseite angeordnet, als es in der Draufsicht auf die Oberseite sichtbar ist. Die Oberseite ist bevorzugt im Wesentlichen eben und dabei rechtwinklig zur Schneiddrehachse ausgebildet. Durch das Radialförderelement wird erreicht, dass im Betrieb die geschnittenen Nutzpflanzen bereits durch die rotierende Schneidvorrichtung zumindest anteilig auf die Schneiddrehachse zubewegt werden. Das Stauen von geschnittenen Nutzpflanzen auf der Schneidvorrichtung und eine dadurch bedingte Behinderung des weiteren Schneidens bzw. ein Verlust von Erntegut werden somit verhindert und insbesondere ein zügiger Gutfluss von den Messerelementen bis zu einem der Schneidvorrichtungen übergeordneten Mitnehmer, der nicht Teil der Erfindung ist, sichergestellt.

Bevorzugt grenzt das Radialförderelement entlang einer Förderkontur an ein in die Umlaufrichtung vorgeordnetes Zwischenelement an. Ein Zuförderabschnitt der Förderkontur verläuft von einem Neutralförderpunkt X aus vorzugsweise anteilig in die Umlaufrichtung und anteilig in radialer Richtung von der Schneiddrehachse weg. Im Neutralförderpunkt verläuft die Förderkontur insbesondere ausschließlich in die radiale Richtung und/oder die Förderrichtung ausschließlich in die tangentiale Richtung. Der Neutralförderpunkt ist alternativ oder zusätzlich bevorzugt der Punkt des Zuförderabschnittes, der bezogen auf die Umlaufrichtung am weitesten hinten angeordnet ist. In der Draufsicht betrachtet verläuft insbesondere eine zu zumindest einem Teil der Förderkontur rechtwinklige Förderkonturorthogonale von der Förderkontur aus anteilig auf die Schneiddrehachse zu. Die Förderkonturorthogonale ist insbesondere parallel zur oder liegt in der Förderrichtung. Insbesondere ist sowohl das Zwischenelement als auch das Radialförderelement sowohl von der Schneiddrehachse als auch von einem Außenumfang der Schneidvorrichtung beabstandet. Besonders bevorzugt weist die Schneidvorrichtung eine Mehrzahl von Radialförderelementen und eine Mehrzahl von Zwischenelementen auf, die sich in Umlaufrichtung abwechselnd angeordnet sind. Die Förderkontur beschreibt in der Draufsicht denjenigen zumindest im Wesentlichen linienförmigen Grenzbereich zwischen dem zumindest einen Radialförderelement und dem zumindest einen Zwischenelement. Das Zwischenelement und/oder das Radialförderelement sind oberseitig und/oder auf der gegenüberliegenden Seite bevorzugt zumindest zu einem überwiegenden Teil eben ausgebildet, wobei dieser Teil sich bevorzugt orthogonal zu Schneiddrehachse erstreckt. Der Zuförderabschnitt der Förderkontur ist derjenige Teil der Förderkontur, der eine Förderung der geschnittenen Nutzpflanzen in die Förderrichtung bewirkt.

Vorzugsweise ist das Radialförderelement zumindest bereichsweise relativ zum Zwischenelement in axialer Richtung um zumindest 1 mm, bevorzugt um zumindest 3 mm, besonders bevorzugt um zumindest 6 mm erhaben ausgebildet. Die axiale Richtung ist bezogen auf die Schneiddrehachse. Durch diese Ausbildung des Radialförderelementes wird im Zusammenhang mit dem schwerkraftbedingten Aufliegen der Nutzpflanzen auf der Oberseite eine besonders zuverlässige Förderung derer in die Förderrichtung erreicht.

Der insbesondere den Höhenunterschied überbrückende Übergang vom Zwischenelement zum Radialförderelement ist bevorzugt fließend ausgebildet, so dass die Oberfläche der Schneidvorrichtung bei deren Rotation allmählich ansteigt. Nahe des Messerelementes nimmt der Höhenunterschied zwischen dem Zwischenelement und dem Radialförderelement mit zunehmendem Radius bevorzugt ab bzw. gehen beide bevorzugt in einen Bereich mittlerer Höhe über. Vorzugsweise ist das Messerelement in einer Ansicht der Schneidvorrichtung aus radialer Richtung zwischen einem oberen Teil des Radialförderelements und einem unteren Teil des Zwischenelementes angeordnet und befindet sich auf mittlerer Höhe. Insbesondere erstrecken sich einzig die Messerelemente bis zum Außenradius der Schneidvorrichtung. Durch diese Ausbildung der Schneidvorrichtung bzw. der Radialförderelemente kommt es zu einer optimalen Einwirkung derer auf die geschnittenen Nutzpflanzen, ohne dass die Funktion der Messerelemente beeinträchtigt wird.

In einer vorteilhaften Ausgestaltung der Erfindung stimmt eine in die axiale Richtung gemessene Materialstärke des Zwischenelementes mit einer in die axiale Richtung gemessenen Materialstärke des Radialförderelementes zumindest im Wesentlichen überein. Bevorzugt stimmt auch eine in die axiale Richtung gemessene Materialstärke des Messerelementes damit zumindest im Wesentlichen überein. Die Materialstärke beträgt bevorzugt zwischen 1 mm und 10 mm, besonders bevorzugt zwischen 2 mm und 6 mm, insbesondere im Wesentlichen 3 mm. In einer bevorzugten Ausführungsform sind das Zwischenelement und/oder das Radialförderelement ausgehend von zumindest dem Bereich mittlerer Höhe der Schneidvorrichtung gesickte Bereiche der Schneidvorrichtung. Dadurch ist das Radialförderelement und/oder das Zwischenelement relativ zu dem Bereich mittlerer Höhe angehoben oder abgesenkt. Der Bereich mittlerer Höhe kann beispielsweise ein einen Innenradius der Schneidvorrichtung ausbildender Montagebereich der Schneidvorrichtung sein. Das Einbringen solcher Sicken ist beispielsweise, ausgehend von einem insbesondere aus einem Flachbandmaterial einstückig hergestellten ebenen Blech, durch eine Prägung möglich. Durch das Einbringen der Sicken erhöht sich das Widerstandsmoment der Schneidvorrichtung, so dass der Querschnitt der Schneidvorrichtung erheblich verringert sein kann. Dabei ist eine Reduktion des Querschnitts in einer Größenordnung von bis zu 40% im Vergleich zu herkömmlichen Schneidvorrichtungen erreichbar. Aufgrund des infolgedessen erheblich geringeren Gewichts der Schneidvorrichtung sind die Schnittkräfte und das Anlaufmoment verringert, so dass bei einer solche Schneidvorrichtungen antreibenden Erntemaschine eine deutliche Kraftstoffersparnis möglich ist. Hierdurch lässt sich das Radialförderelement sowie eine erhöhte Stabilität der Schneidvorrichtung mit nur minimalem Materialaufwand realisieren.

Die Schneidvorrichtung weist bevorzugt zumindest eine insbesondere in dem Radialförderelement oder dem Zwischenelement angeordnete Montagebohrung auf, die sich parallel zur Schneiddrehachse durch das Material erstreckt. Insbesondere weist die Schneidvorrichtung zumindest zwei Paare von derartigen Montagebohrungen auf. Diese dienen der Anordnung von Werkzeugen an der Schneidvorrichtung, die einem Zerfransen der auf dem Acker verbleibenden, verwurzelten Pflanzenteile und/oder einen Entfernen von Ablagerungen oberhalb von Spitzenhaltern eines die Schneidvorrichtung insbesondere umfassenden Erntevorsatzes dienen.

Vorzugsweise ist der Zuförderabschnitt in der Draufsicht derart bogenförmig ausgebildet, dass ein Zuförderwinkel α zwischen dem Zuförderabschnitt und einer den Neutralförderpunkt schneidenden Radialen mit wachsendem Radius zunimmt. Der Zuförderwinkel α wird insbesondere an einem Schnittpunkt der Radialen mit einer an dem Zuförderabschnitt anliegenden Zufördertangente gemessen und nimmt mit einer Entfernung des Berührungspunktes der Zufördertangente am Zuförderabschnitt von der Schneiddrehachse zu, wobei sich auch der Schnittpunkt der Radialen mit der Zufördertangente von der Schneiddrehachse entfernt. Der Zuförderwinkel α steigt bevorzugt nicht über 90° und variiert besonders bevorzugt über eine Winkelspanne von 0° bis 90°. Der Zuförderabschnitt verläuft bevorzugt mit wachsendem Abstand zur Schneiddrehachse mit einem wachsenden Anteil in die Umlaufrichtung. Durch diese Ausbildung des Zuförderabschnittes bzw. der Förderkontur lassen sich die geschnittenen Nutzpflanzen im Betrieb allmählich in die Förderrichtung beschleunigen und so letztlich eine möglichst umfangreiche Förderwirkung erreichen.

In einer bevorzugten Ausgestaltung der Erfindung hat die Förderkontur einen Abförderabschnitt, der anteilig entgegen der Umlaufrichtung und anteilig in radialer Richtung von der Schneiddrehachse weg verläuft. Der Abförderabschnitt ist insbesondere zwischen der Schneiddrehachse und dem Zuförderabschnitt angeordnet. Insbesondere verläuft auch der Abförderabschnitt bogenförmig und/oder geht fließend in den Zuförderabschnitt über. Bevorzugt grenzen der Abförderabschnitt und der Zuförderabschnitt im Neutralförderpunkt aneinander. Bezogen auf die den Neutralförderpunkt schneidenden Radialen stellt der Neutralförderpunkt insbesondere einen Wendepunkt dar, an dem sich das Vorzeichen des Erstreckungsanteils der Förderkontur in die tangentiale Richtung umkehrt. Ein analog zum Zuförderwinkel α gemessener Abförderwinkel β variiert bevorzugt über eine Winkelspanne von 10° bis 30°. Der Abförderabschnitt reicht bis zu einem Radius, bis zu dem die geschnittenen Nutzpflanzen in radialer Richtung gefördert werden sollen, um von da vom Mitnehmer aufgenommen zu werden. Eine weitere Förderung der Nutzpflanzen, insbesondere von vom Mitnehmer regelmäßig nicht erfassten Lieschblättern der Nutzpflanzen, in Richtung der Schneiddrehachse führte zu einem Umwickeln einer Antriebsachse der Schneidvorrichtung, das den Betrieb der Schneidvorrichtung stört bzw. diese im Extremfall blockiert. Der Abförderabschnitt bewirkt eine Förderung zu nahe an die Schneiddrehachse gelangter Nutzpflanzenteile von der Schneiddrehachse weg, um diesen nachteiligen Effekt zu verhindern. Bevorzugt ist das Radialförderelement bzw. die Förderkontur zumindest abschnittsweise sichelförmig ausgebildet.

Vorzugsweise umfasst die Schneidvorrichtung mehrere Messerelemente, wobei zumindest jedem vierten, insbesondere zumindest zwei Messerelementen ein Radialförderelement zugeordnet ist. Insbesondere ist genau jedem zweiten Messerelement ein Radialförderelement zugeordnet. Ein Zuförderabschnitt des zumindest einen Radialförderelementes verläuft bevorzugt auf das Messerelement, dem es zugeordnet ist, bzw. deren Schneide zu. Insbesondere bildet eine Schneide des jeweiligen Messerelementes eine Verlängerung der Bogenform der Förderkontur.

In einer vorteilhaften Ausgestaltung der Erfindung ist die Schneidvorrichtung sowohl zu einer Montage in einer ersten Montageposition als auch zu einer Montage in einer zweiten Montageposition ausgebildet. In der ersten Montageposition ist die Oberseite, welche hier eine erste Oberseite bildet, zumindest anteilig nach oben gerichtet. In der zweiten Montageposition ist eine der ersten Oberseite gegenüberliegende zweite Oberseite der Schneidvorrichtung zumindest anteilig nach oben gerichtet. Die Positionierung der Schneiddrehachse ist in beiden Montagepositionen im Betrieb bevorzugt übereinstimmend. Durch die beiden Montagepositionen ist die Schneidvorrichtung insbesondere als Wechselschneidscheibe bzw. Wechselschneidscheibensegment ausgebildet, die bzw. das sich im Betrieb, ausgehend von der Trag- oder Antriebsvorrichtung betrachtet, an dem sie bzw. es anzuordnen sind, in beide Drehrichtungen betreiben lassen. Insbesondere lassen sich identisch ausgebildete, erfindungsgemäße Schneidvorrichtungen sowohl an der linken Hälfte des Erntevorsatzes als auch an der rechten Hälfte des Erntevorsatzes anordnen, wobei die linke Hälfte zu einer Förderung der geschnittenen Nutzpflanzen nach rechts und die rechte Hälfte zur Förderung der geschnittenen Nutzpflanzen nach links ausgebildet ist, um diese einem mittig angeordneten Erntegutkanal zuzuführen. Durch diese Ausbildung der erfindungsgemäßen Schneidvorrichtung hat diese bei Erhalt der durch die sichelförmigen Messerelemente und das Radialförderelement gegebenen Vorzüge den signifikanten Vorteil, dass es universal einsetzbar ist und vom Betreiber nicht unterschiedliche gattungsgemäße Schneidvorrichtungen als Ersatzteile für dieselbe Maschine vorgehalten werden müssen.

Bevorzugt grenzt das Zwischenelement entlang einer Zwischenkontur an einen in die Umlaufrichtung vorgeordnetes weiteres Radialförderelement an. In der Draufsicht auf die (erste) Oberseite stimmt der Verlauf der Zwischenkontur insbesondere mit dem Verlauf der Förderkontur überein. Die Übereinstimmung ist dabei unabhängig vom Anstieg bzw. vom Absinken der Förderkontur in die Umlaufrichtung. Die Zwischenkontur ist insbesondere ebenso bogenförmig wie die Förderkontur ausgebildet und relativ zu letzterer vorzugsweise einzig um die Schneiddrehachse verschwenkt angeordnet.

Besonders bevorzugt ist in axialer Richtung gegenüber von der Zwischenkontur an der ersten Oberseite eine Förderkontur an der zweiten Oberseite ausgebildet. Insbesondere bildet das in der ersten Montageposition gegebene Radialförderelement in der zweiten Montageposition ein Zwischenelement aus und bildet das in der ersten Montageposition gegebene Zwischenelement in der zweiten Montageposition ein Radialförderelement aus. Bevorzugt haben das Zwischenelement und das Radialförderelement (in einer der Montagepositionen) in der Draufsicht eine im Wesentlichen gleiche Form und sind insbesondere zumindest im Wesentlichen nierenförmig ausgebildet. Insbesondere haben das Zwischenelement und das Radialförderelement eine übereinstimmende tangentiale und/oder radiale Erstreckung.

Bevorzugt ist zumindest ein Teil einer Schneide eines ersten Messerelementes relativ zu zumindest einem Teil einer Schneide eines in Umlaufrichtung benachbart angeordneten zweiten Messerelementes in axialer Richtung versetzt angeordnet. Insbesondere haben beide Messerelemente eine übereinstimmende in axialer Richtung gemessene Materialstärke, die vorzugsweise zwischen 1 mm und 6 mm, insbesondere 3 mm beträgt. In tangentialer Richtung betrachtet sind die Messerelemente insbesondere derart versetzt angeordnet, dass zwischen den beiden Messerelementen ein Freiraum bleibt. Dieser Freiraum hat insbesondere eine axiale Erstreckung von 3 mm. Im Betrieb wird jetzt die Nutzpflanze bevorzugt von einer Mehrzahl von Messerelementen jeweils teilweise geschnitten, wobei durch die vorbeschriebene Versetzung der Messerelemente eine Schnittbreite bzw. -höhe entsteht, die die Materialstärke der Schneidvorrichtung bzw. von deren Messerelementen übersteigt. Hierdurch wird unabhängig von der Montageposition vermieden, dass die zu fördernden Nutzpflanzen von dem Radialförderelement in die Fortbewegungsrichtung geschoben werden. Das Radialförderelement hat bevorzugt eine Höhe, die gleich oder höher als die Höhe der Messerelemente ist, jeweils in axialer Richtung gemessen. In dieser Ausbildung ist das Radialförderelement bevorzugt dem unteren Messerelement zugeordnet.

Vorzugsweise ist zwischen der Schneiddrehachse und dem Radialförderelement eine in Umlaufrichtung umlaufende Nut angeordnet. Durch diese werden mechanische Spannungen innerhalb der Schneidvorrichtung reduziert und dadurch deren Ausfallsicherung erhöht.

Die Aufgabe wird weiterhin gelöst durch einen Erntevorsatz für landwirtschaftliche Erntemaschinen, insbesondere zum Ernten von stängeligem Erntegut wie Mais oder Getreide. Der Erntevorsatz weist eine Mehrzahl drehbar gelagerter Schneidvorrichtungen wie vor- und/oder nachbeschrieben auf. Deren Schneiddrehachsen sind in eine Querrichtung voneinander beabstandet. Weiterhin weist der Erntevorsatz zumindest eine im Betrieb umlaufende Mitnehmervorrichtung mit zumindest im Betrieb oberhalb der Schneidvorrichtungen angeordneten Mitnehmerelementen zur Förderung der abgeschnittenen Nutzpflanzen in die Querrichtung auf. Die Schneiddrehachsen sind hierbei bevorzugt parallel zueinander angeordnet. Die Querrichtung ist insbesondere horizontal und rechtwinklig zu zumindest einer Schneiddrehachse orientiert. Mitnehmerdrehachsen, um die die Mitnehmervorrichtung bevorzugt umläuft, sind in einer Seitenansicht insbesondere höchstens geringfügig zu der zumindest einen Schneiddrehachse angewinkelt. Insbesondere weist der Erntevorsatz pro zu erntender Maisreihe genau eine Schneidvorrichtung oder genau zwei Schneidvorrichtungen auf. Das bedeutet insbesondere, dass die Schneiddrehachsen um zumindest im Wesentlichen 75 cm bzw. 37,5 cm voneinander beabstandet sind. Es ist auch denkbar, dass jeder Schneidvorrichtung eine koaxial zur Schneiddrehachse angeordnete rotierende Mitnehmervorrichtung zugeordnet ist. Mit diesem Erntevorsatz lassen sich die vorbeschriebenen Vorteile der erfindungsgemäßen Schneidvorrichtung bestmöglich im Betrieb umsetzen.

Vorzugsweise ist die Förderkontur, insbesondere der Zuförderabschnitt, zumindest einer Schneidvorrichtung der Mitnehmervorrichtung in eine Erntefahrtrichtung, die insbesondere der Fortbewegungsrichtung gleicht, zumindest anteilig vorgeordnet. Bevorzugt erstreckt sich die Förderkontur bzw. der Zuförderabschnitt bis unter die Mitnehmerelemente. Die Mitnehmervorrichtung umfasst insbesondere eine im Betrieb umlaufende Gliederkette, deren Kettenglieder zumindest teilweise zumindest ein Mitnehmerelement aufweisen. Der Erntevorsatz umfasst insbesondere zumindest zwei derartiger Gliederketten. Zumindest ein Teil der Kettenglieder weist zumindest zwei übereinander angeordneter Mitnehmerelemente auf.

Im Betrieb werden die Nutzpflanzen, nachdem sie geschnitten sind, vom Radialförderelement entgegen der Erntefahrtrichtung zur Mitnehmervorrichtung gefördert und von dieser anschließend in die Querrichtung abgefördert. Durch die zwei übereinander angeordneten Mitnehmerelemente ist die Abförderung besonders betriebssicher.

Die Aufgabe wird weiterhin gelöst durch einen Feldhäcksler mit einem vor- und/oder nachbeschriebenen Erntevorsatz. Der Feldhäcksler hat insbesondere mehrere Antriebsräder und einen Motor.

Weitere Einzelheiten und Vorteile der Erfindung sind den nachfolgend beschriebenen, schematisch dargestellten Ausführungsbeispielen zu entnehmen. Es zeigen
- Fig. 1a: ein erstes Ausführungsbeispiel der erfindungsgemäßen Schneidvorrichtung in einer Draufsicht,
- Fig. 1b: das erste Ausführungsbeispiel in einem teilweise dargestellten Querschnitt gemäß Hilfslinie B in Fig. 1a,
- Fig. 2: das erste Ausführungsbeispiel in einer perspektivischen Ansicht,
- Fig. 3a: das erste Ausführungsbeispiel in der Draufsicht,
- Fig. 3b: das erste Ausführungsbeispiel in einem ersten Teilschnitt gemäß Hilfslinie B in Fig. 3a,
- Fig. 3c: das erste Ausführungsbeispiel in einem zweiten Teilschnitt gemäß Hilfslinie C in Fig. 3a,
- Fig. 4a: ein zweites Ausführungsbeispiel der erfindungsgemäßen Schneidvorrichtung in einer Draufsicht,
- Fig. 4b: das zweite Ausführungsbeispiel in einem teilweise dargestellten Querschnitt gemäß Hilfslinie B in Fig. 4a,
- Fig. 5: das zweite Ausführungsbeispiel in einer perspektivischen Ansicht,
- Fig. 6a: das zweite Ausführungsbeispiel in der Draufsicht,
- Fig. 6b: das zweite Ausführungsbeispiel in einem ersten Teilschnitt gemäß Hilfslinie B in Fig. 6a,
- Fig. 6c: das zweite Ausführungsbeispiel in einem zweiten Teilschnitt gemäß Hilfslinie C in Fig. 6a,
- Fig. 7: ein erstes Ausführungsbeispiel eines erfindungsgemäßen Erntevorsatzes in einer teilweise dargestellten Draufsicht,
- Fig. 8: ein zweites Ausführungsbeispiel eines erfindungsgemäßen Erntevorsatzes in einer teilweise dargestellten Draufsicht.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

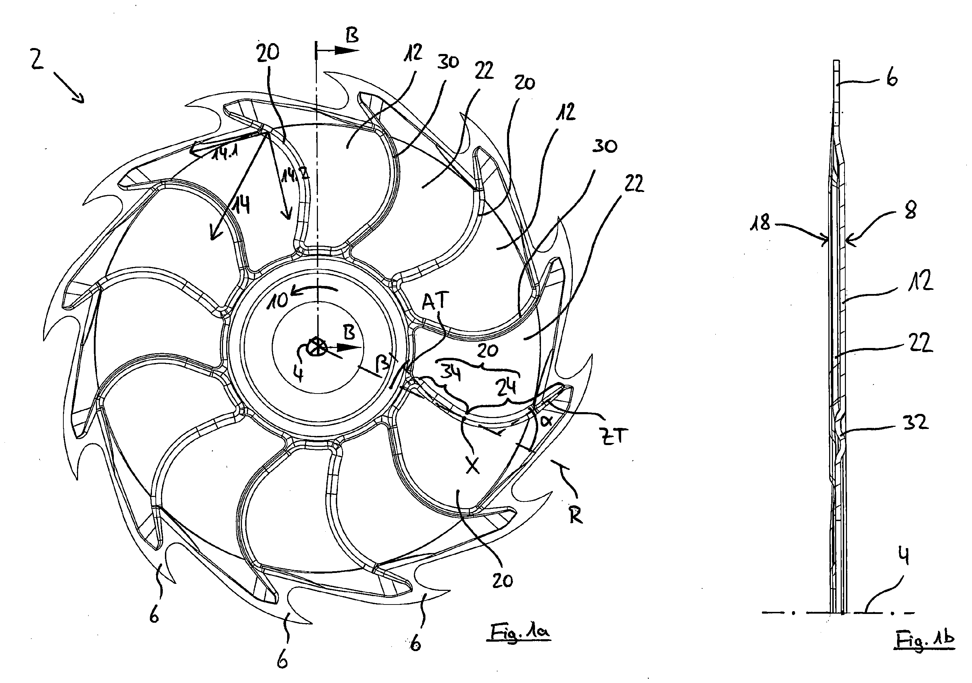

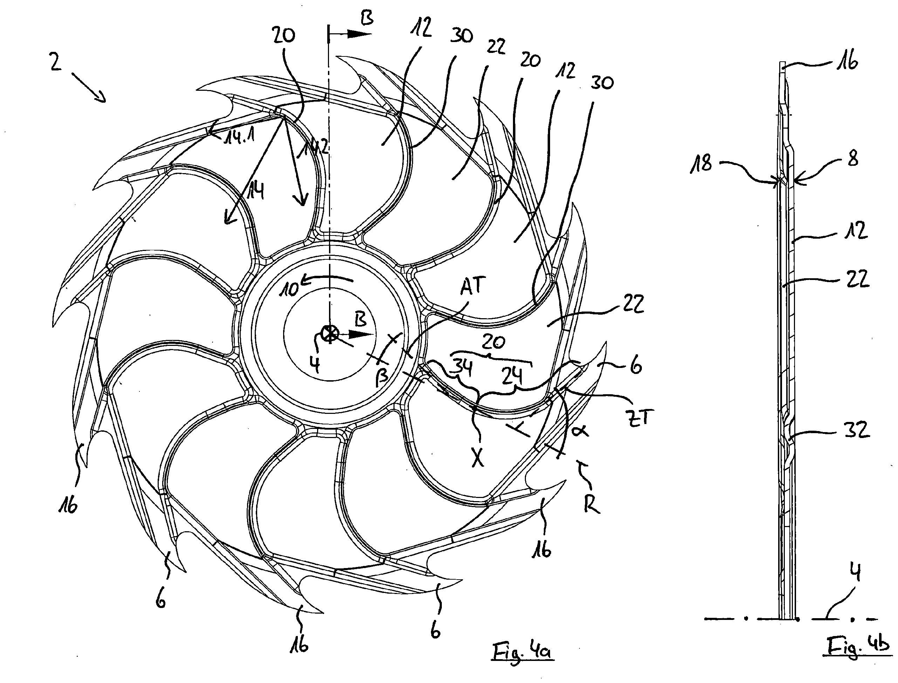

Die Fig. 1a und 4a zeigen unterschiedliche Ausführungsbeispiele einer erfindungsgemäßen Schneidvorrichtung 2. In beiden Ausführungsbeispielen ist die Schneidvorrichtung 2 zum Schneiden landwirtschaftlicher Nutzpflanzen durch eine Drehbewegung um eine Schneiddrehachse 4 ausgebildet. Die dargestellten Schneidvorrichtungen 2 umfassen eine Mehrzahl von Messerelementen 6, 16, die in den Draufsichten auf die Oberseite 8 der Schneidvorrichtungen 2 in eine Umlaufrichtung 10 geöffnet ausgebildet sind. Zudem sind die Messerelemente 6, 16 in den Draufsichten auf die Oberseite 8 der Schneidvorrichtungen 2 sichelförmig ausgebildet.

Beide Ausführungsbeispiele weisen an der Oberseite 8 angeordnete und relativ zu den Messerelementen 6, 16 ortsfeste Radialförderelemente 12 auf. Die Radialförderelemente sind abschnittsweise zu einer Förderung der Nutzpflanzen in eine Förderrichtung 14 ausgebildet. Die Förderrichtung 14 ist relativ zur Schneiddrehachse 4 anteilig tangential 14.1 und anteilig radial 14.2 zur Schneiddrehachse 4 ausgerichtet.

Jedes der gezeigten Radialförderelemente 12 grenzt entlang einer Förderkontur 20 an ein in die Umlaufrichtung 10 vorgeordnetes Zwischenelement 22 an. Ein Zuförderabschnitt 24 der Förderkonturen 20 verläuft von einem Neutralförderpunkt X aus anteilig in die Umlaufrichtung 10 und anteilig in radialer Richtung von der Schneiddrehachse 4 weg. Die Radialförderelemente 12 sind relativ zu den angrenzenden Zwischenelementen 22 in axialer Richtung um 6 mm erhaben ausgebildet (vgl. Fig. 1b und 4b). Eine in die axiale Richtung gemessene Materialstärke des Zwischenelementes 22 stimmt mit einer in die axiale Richtung gemessenen Materialstärke des Radialförderelementes 12 überein und beträgt 3 mm.

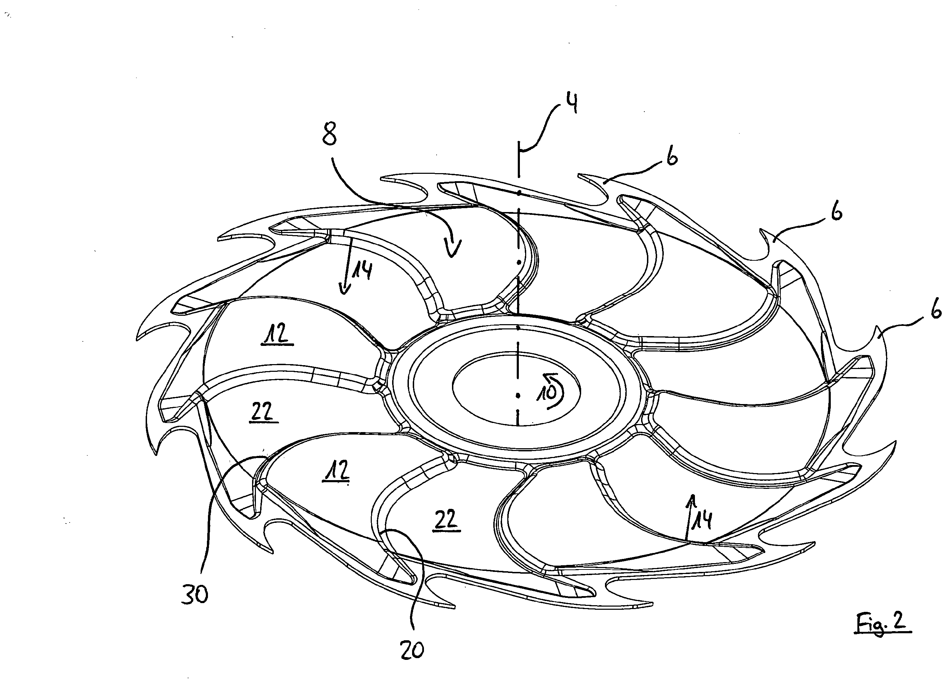

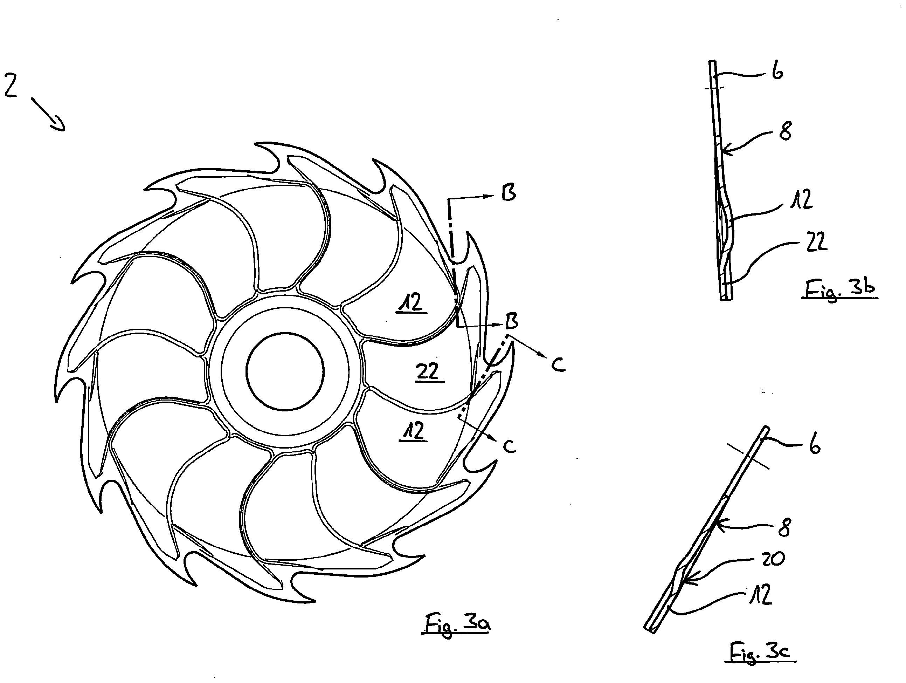

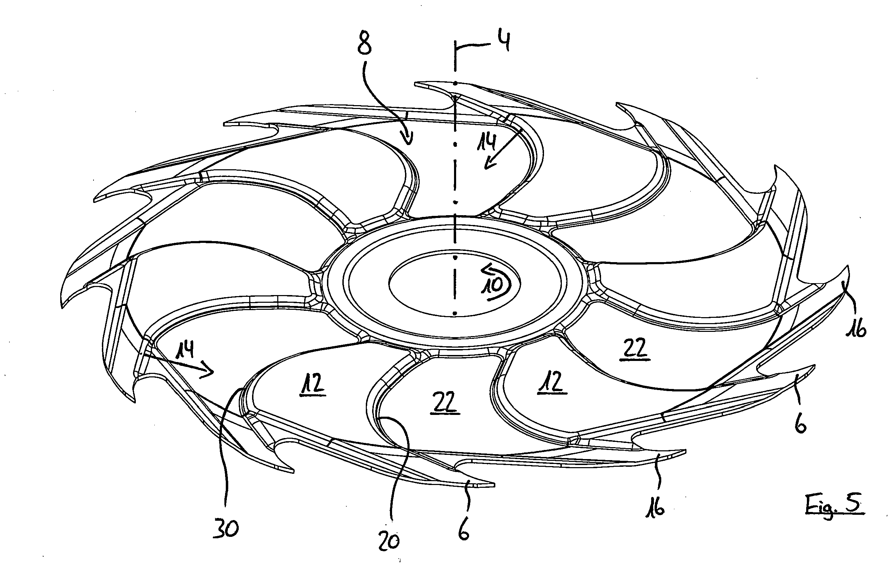

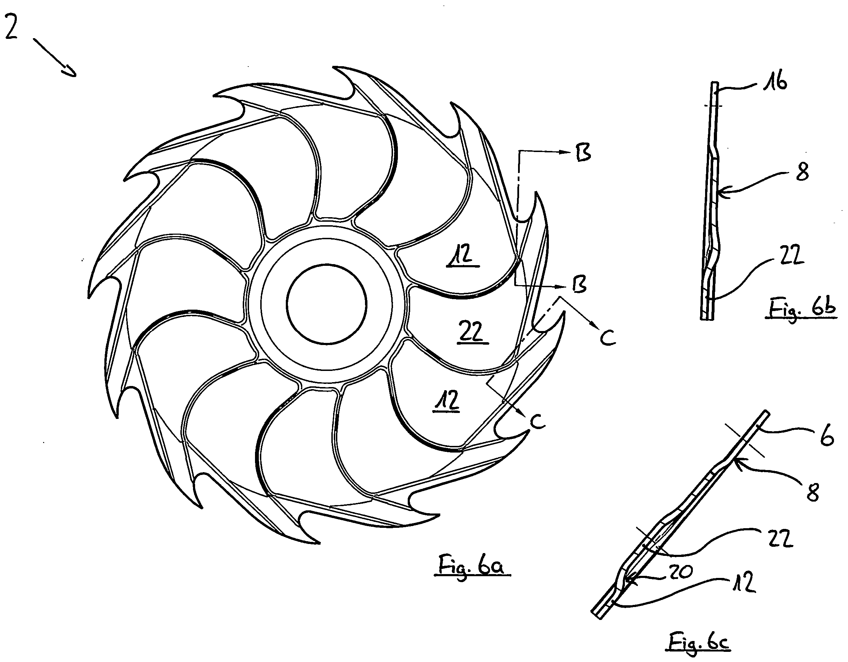

Die Zuförderabschnitte 24 sind in den Draufsichten derart bogenförmig ausgebildet, dass ein Zuförderwinkel α zwischen einer Zufördertangentialen ZT des Zuförderabschnittes 24 und einer den Neutralförderpunkt X des Zuförderabschnittes 24 schneidenden Radialen R mit wachsendem Radius, d.h. Abstand zur Schneiddrehachse 4, zunimmt (vgl. Fig. 3a und 6a). Die gezeigten Förderkonturen 20 haben neben dem Zuförderabschnitt 24 jeweils einen Abförderabschnitt 34, der anteilig entgegen der Umlaufrichtung 10 und anteilig in radialer Richtung von der Schneiddrehachse 4 weg verläuft und zwischen einer Abfördertangentialen AT und der Radialen R einen Abförderwinkel β bildet. Die Abförderabschnitte 34 sind zwischen der Schneiddrehachse 4 und dem jeweils anschließenden Zuförderabschnitt 24 angeordnet und grenzen im Neutralförderpunkt X an einen der Zuförderabschnitte 24. Jedem zweiten der Messerelemente 6, 16 ist ein Radialförderelement 12 zugeordnet (vgl. insbesondere Fig. 2 und 5). Es ist jedoch ebenso möglich, dass jedem dritten, jedem vierten oder jedem sechsten Messerelement 6, 16 ein Radialförderelement zugeordnet ist.

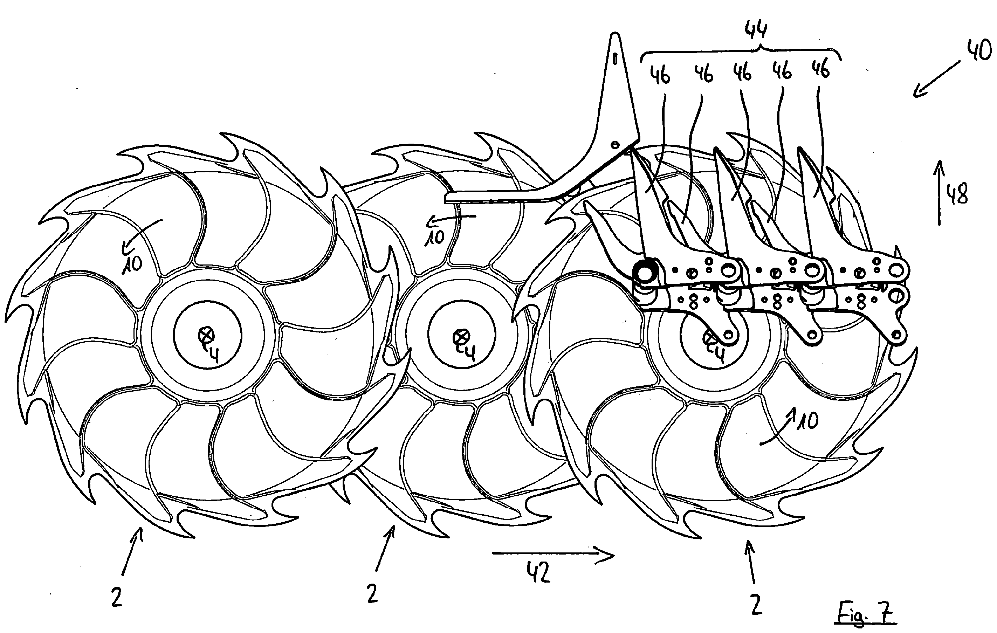

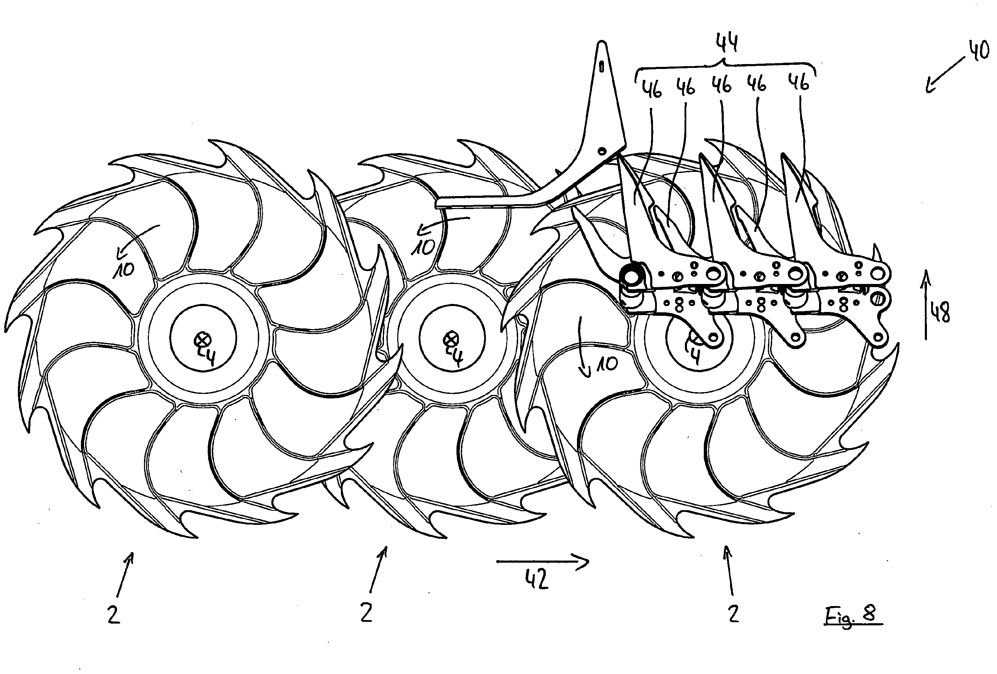

Beide Ausführungsbeispiele der erfindungsgemäßen Schneidvorrichtung 2 sind sowohl zu einer Montage in einer ersten Montageposition (vgl. Fig. 7 und 8) als auch zu einer Montage in einer zweiten Montageposition, in der die Umlaufrichtung 10 derjenigen in der ersten Montageposition entgegengesetzt ist, ausgebildet. In der ersten Montageposition ist die als eine erste Oberseite ausgebildete Oberseite 8 zumindest anteilig nach oben gerichtet. In der zweiten Montageposition ist eine der ersten Oberseite 8 gegenüberliegende zweite Oberseite 18 der Schneidvorrichtung 2 zumindest anteilig nach oben gerichtet.

Die gezeigten Zwischenelemente 22 grenzen jeweils entlang einer Zwischenkontur 30 an ein in die Umlaufrichtung 10 vorgeordnetes, weiteres Radialförderelement 12 an. In den Draufsichten auf die erste Oberseite 8 (vgl. Fig. 1a, 3a, 4a, 6a) stimmt der Verlauf der Zwischenkontur 30 mit dem Verlauf der Förderkontur 20 überein. In axialer Richtung gegenüber von der Zwischenkontur 30 der ersten Oberseite 8 ist eine Förderkontur 20 an der zweiten Oberseite 18 ausgebildet.

Das zweite Ausführungsbeispiel der Schneidvorrichtung 2 hat zwei unterschiedliche Gruppen von Messerelementen 6, 16. Die Schneiden der Messerelemente 6 einer ersten Gruppe sind relativ zu den Schneiden der Messerelemente 16 einer zweiten Gruppe in axialer Richtung versetzt angeordnet (vgl. Fig. 4b, Fig. 6b und Fig. 6c). Dabei wechseln sich die Messerelemente 6, 16 der unterschiedlichen Gruppen in Umlaufrichtung 10 ab. Demgegenüber sind beim ersten Ausführungsbeispiel sämtliche Messerelemente 6 auf derselben, mittleren axialen Höhe angeordnet (vgl. Fig. 1b, 3b und 3c).

Beide Ausführungsbeispiele umfassen zwischen ihrer Schneiddrehachse 4 und den Radialförder- und Zwischenelementen 12, 22 eine in die Umlaufrichtung 10 verlaufende Nut 32, die in den Fig. 1b und 4b dargestellt ist.

Fig. 7 zeigt einen erfindungsgemäßen und hier nur teilweise dargestellten Erntevorsatz 40 mit Schneidvorrichtungen 2 gemäß dem ersten Ausführungsbeispiel (Fig. 1a bis 3c). Fig. 8 zeigt einen weiteren erfindungsgemäßen und ebenso teilweise dargestellten Erntevorsatz 40 mit Schneidvorrichtungen 2 gemäß dem zweiten Ausführungsbeispiel (Fig. 4a bis 6c). Die in den Fig. 7 und 8 dargestellten Schneidvorrichtungen 2 sind dabei in derselben Montageposition angeordnet.

Die gezeigten Erntevorsätze 40 sind für landwirtschaftliche Erntemaschinen, insbesondere zum Ernten von Mais oder Getreide ausgebildet. Die gezeigten Schneidvorrichtungen 2 sind drehbar relativ zu einem nicht gezeigten Erntevorsatzrahmen gelagert. Die Schneiddrehachsen 4 der Schneidvorrichtungen 2 sind in eine Querrichtung 42 voneinander beabstandet. Die gezeigten Erntevorsätze 40 umfassen eine im Betrieb umlaufende und nur teilweise dargestellte Mitnehmervorrichtung 44. Die Mitnehmervorrichtungen 44 weisen oberhalb der Schneidvorrichtungen 2 zwei angeordnete Mitnehmerelemente 46 zur Förderung der abgeschnittenen Nutzpflanzen in die Querrichtung 42 auf. Die Schneidvorrichtungen 2 sind der Mitnehmervorrichtung 44 in eine Erntefahrtrichtung 48 anteilig vorgeordnet.

## Patentansprüche

1. Schneidvorrichtung (2), die zum Schneiden landwirtschaftlicher Nutzpflanzen durch eine Drehbewegung um eine Schneiddrehachse (4) ausgebildet ist und zumindest ein Messerelement (6, 16) umfasst, das in einer Draufsicht auf eine Oberseite (8) der Schneidvorrichtung (2) in eine Umlaufrichtung (10) geöffnet ausgebildet ist, wobei die Schneidvorrichtung (2) zumindest ein zumindest an der Oberseite (8) angeordnetes und relativ zum Messerelement (6, 16) ortsfestes Radialförderelement (12) aufweist, das zumindest abschnittsweise zu einer Förderung der Nutzpflanzen in eine Förderrichtung (14) ausgebildet ist, die relativ zur Schneiddrehachse (4) anteilig tangential (14.1) und anteilig radial (14.2) zur Schneiddrehachse (4) ausgerichtet ist, **dadurch gekennzeichnet, dass**
das Radialförderelement (12) ausgehend von zumindest einem Bereich mittlerer Höhe der Schneidvorrichtung (2) ein gesickter Bereich der Schneidvorrichtung (2) ist.

2. Schneidvorrichtung nach Anspruch 1, **dadurch gekennzeichnet, dass** das Radialförderelement (12) entlang einer Förderkontur (20) an ein in die Umlaufrichtung (10) vorgeordnetes Zwischenelement (22) angrenzt, wobei ein Zuförderabschnitt (24) der Förderkontur (20) von einem Neutralförderpunkt (X) aus anteilig in die Umlaufrichtung (10) und anteilig in radialer Richtung von der Schneiddrehachse (4) weg verläuft.

3. Schneidvorrichtung nach einem der vorhergehenden Ansprüche, **dadurch gekennzeichnet, dass** das Radialförderelement (12) und/oder das Zwischenelement (22) ausgehend von zumindest einem Bereich mittlerer Höhe der Schneidvorrichtung (2) ein gesickter Bereich der Schneidvorrichtung (2) ist.

4. Schneidvorrichtung nach einem der vorhergehenden Ansprüche, **dadurch gekennzeichnet, dass** eine in die axiale Richtung gemessene Materialstärke des Zwischenelementes (22) mit einer in die axiale Richtung gemessenen Materialstärke des Radialförderelementes (12) zumindest im Wesentlichen übereinstimmt.

5. Schneidvorrichtung nach einem der vorhergehenden Ansprüche, **dadurch gekennzeichnet, dass** der Zuförderabschnitt (24) in der Draufsicht derart bogenförmig ausgebildet ist, dass ein Zuförderwinkel (α) zwischen einer den Neutralförderpunkt (X) schneidenden Radialen (R) und dem Zuförderabschnitt (24) mit wachsendem Radius zunimmt.

6. Schneidvorrichtung nach einem der vorhergehenden Ansprüche, **dadurch gekennzeichnet, dass** ein Abförderabschnitt (34) der Förderkontur (20) anteilig entgegen der Umlaufrichtung (10) und anteilig in radialer Richtung von der Schneiddrehachse (4) wegverläuft und insbesondere zwischen der Schneiddrehachse (4) und dem Zuförderabschnitt (24) angeordnet ist.

7. Schneidvorrichtung nach einem der vorhergehenden Ansprüche, **dadurch gekennzeichnet, dass** das Zwischenelement (22) ausgehend von zumindest einem Bereich mittlerer Höhe der Schneidvorrichtung (2) ein gesickter Bereich der Schneidvorrichtung (2) ist.

8. Schneidvorrichtung nach einem der vorhergehenden Ansprüche, **dadurch gekennzeichnet, dass** das Radialförderelement zumindest abschnittsweise sichelförmig ausgebildet ist.

9. Schneidvorrichtung nach einem der vorhergehenden Ansprüche, **gekennzeichnet durch** mehrere Messerelemente (6, 16), wobei zumindest jedem vierten, bevorzugt jedem zweiten der Messerelemente (6, 16) ein Radialförderelement (12) zugeordnet ist.

10. Schneidvorrichtung nach einem der vorhergehenden Ansprüche, **gekennzeichnet durch** eine Ausbildung sowohl zu einer Montage in einer ersten Montageposition, in der die als eine erste Oberseite ausgebildete Oberseite (8) zumindest anteilig nach oben gerichtet ist, als auch zu einer Montage in einer zweiten Montageposition, in der eine der ersten Oberseite (8) gegenüberliegende zweite Oberseite (18) der Schneidvorrichtung (2) zumindest anteilig nach oben gerichtet ist.

11. Schneidvorrichtung nach einem der Ansprüche 2 - 10, **dadurch gekennzeichnet, dass** das Zwischenelement (22) entlang einer Zwischenkontur (30) an ein in Umlaufrichtung (10) vorgeordnetes weiteres Radialförderelement (12) angrenzt, wobei in der Draufsicht auf die erste Oberseite (8) der Verlauf der Zwischenkontur (30) insbesondere mit dem Verlauf der Förderkontur (20) übereinstimmt.

12. Schneidvorrichtung nach einem der Ansprüche 2- 11, **dadurch gekennzeichnet, dass** in axialer Richtung gegenüber von der Zwischenkontur (30) an der ersten Oberseite (8) eine Förderkontur (20) an der zweiten Oberseite (18) ausgebildet ist.

13. Schneidvorrichtung nach einem der vorhergehenden Ansprüche, **dadurch gekennzeichnet, dass** zumindest ein Teil einer Schneide eines ersten Messerelementes (6) relativ zu zumindest einem Teil einer Schneide eines in Umlaufrichtung (10) benachbart angeordneten zweiten Messerelementes (16) in axialer Richtung versetzt angeordnet ist.

14. Schneidvorrichtung nach einem der vorhergehenden Ansprüche, **gekennzeichnet durch** zumindest eine zwischen der Schneiddrehachse (4) und dem Radialförderelement (12) angeordnete und in Umlaufrichtung (10) umlaufende Nut (32).

15. Erntevorsatz (40) für landwirtschaftliche Erntemaschinen, insbesondere zum Ernten von stängeligem Erntegut, aufweisend eine Mehrzahl drehbar gelagerter Schneidvorrichtungen (2) nach einem der vorhergehenden Ansprüche, deren Schneiddrehachsen (4) in eine Querrichtung (42) voneinander beabstandet sind, und zumindest eine im Betrieb umlaufende Mitnehmervorrichtung (44) mit oberhalb der Schneidvorrichtungen (2) angeordneten Mitnehmerelementen (46) zur Förderung der abgeschnittenen Nutzpflanzen in die Querrichtung (42).

16. Erntevorsatz nach Anspruch 15, **dadurch gekennzeichnet, dass** die Förderkontur (20), insbesondere der Zuförderabschnitt (24), zumindest einer Schneidvorrichtung (2) der Mitnehmervorrichtung (44) in eine Erntefahrtrichtung (48) zumindest anteilig vorgeordnet ist und sich insbesondere bis unter die Mitnehmerelemente (46) erstreckt.

17. Feldhäcksler mit einem Erntevorsatz nach Anspruch 15 oder 16.

## Claims

1. Cutting device (2) which is designed to cut agricultural crop plants by means of a rotary movement about a cutting rotation axis (4) and comprises at least one blade element (6, 16) which, in a plan view of an upper side (8) of the cutting device (2), is designed to be open in a direction of rotation (10), the cutting device (2) having at least one radial conveying element (12) which is arranged at least on the upper side (8), is stationary relative to the blade element (6, 16) and is designed, at least in portions, to convey the crop plants in a conveying direction (14) which is oriented partially tangentially (14.1) relative to the cutting rotation axis (4) and partially radially (14.2) to the cutting rotation axis (4),
**characterized in that**
the radial conveying element (12) is a corrugated region of the cutting device (2), starting from at least one region of intermediate height of the cutting device (2).

2. Cutting device according to claim 1, **characterized in that** the radial conveying element (12), along a conveying contour (20), adjoins an intermediate element (22) arranged upstream in the direction of rotation (10), a feed portion (24) of the conveying contour (20) extending from a neutral conveying point (X) partially in the direction of rotation (10) and partially in the radial direction away from the cutting rotation axis (4).

3. Cutting device according to either of the preceding claims,
**characterized in that** the radial conveying element (12) and/or the intermediate element (22) is a corrugated region of the cutting device (2), starting from at least one region of intermediate height of the cutting device (2).

4. Cutting device according to any of the preceding claims,
**characterized in that** a material thickness of the intermediate element (22) measured in the axial direction at least substantially corresponds to a material thickness of the radial conveying element (12) measured in the axial direction.

5. Cutting device according to any of the preceding claims,
**characterized in that** the feed portion (24) is arcuate in plan view, such that a feed angle (α) between a radial (R) intersecting the neutral conveying point (X) and the feed portion (24) increases with an increasing radius.

6. Cutting device according to any of the preceding claims,
**characterized in that** a discharge portion (34) of the conveying contour (20) extends partially counter to the direction of rotation (10) and partially in the radial direction away from the cutting rotation axis (4), and in particular is arranged between the cutting rotation axis (4) and the feed portion (24).

7. Cutting device according to any of the preceding claims,
**characterized in that** the intermediate element (22) is a corrugated region of the cutting device (2), starting from at least one region of intermediate height of the cutting device (2).

8. Cutting device according to any of the preceding claims,
**characterized in that** the radial conveying element is sickle-shaped at least in portions.

9. Cutting device according to any of the preceding claims, **characterized by** a plurality of blade elements (6, 16), at least every fourth, preferably every second of the blade elements (6, 16) being associated with a radial conveying element (12).

10. Cutting device according to any of the preceding claims, **characterized by** a design both for assembly in a first assembly position, in which the upper side (8) designed as a first upper side is at least partially directed upward, and for assembly in a second assembly position, in which a second upper side (18) of the cutting device (2) opposite the first upper side (8) is at least partially directed upward.

11. Cutting device according to any of claims 2-10, **characterized in that** the intermediate element (22), along an intermediate contour (30), adjoins a further radial conveying element (12) arranged upstream in the direction of rotation (10), the profile of the intermediate contour (30), in the plan view of the first upper side (8), in particular corresponding to the profile of the conveying contour (20).

12. Cutting device according to any of claims 2-11, **characterized in that,** in the axial direction, a conveying contour (20) is formed on the second upper side (18) opposite the intermediate contour (30) on the first upper side (8).

13. Cutting device according to any of the preceding claims,
**characterized in that** at least part of a cutting edge of a first blade element (6) is arranged offset in the axial direction relative to at least part of a cutting edge of a second blade element (16) arranged adjacently in the direction of rotation (10).

14. Cutting device according to any of the preceding claims, **characterized by** at least one groove (32) which is arranged between the cutting rotation axis (4) and the radial conveying element (12) and extends in the direction of rotation (10).

15. Harvesting attachment (40) for agricultural harvesting machines, in particular for harvesting stalk crops, comprising a plurality of rotatably mounted cutting devices (2) according to any of the preceding claims, the cutting rotation axes (4) of which are spaced apart from one another in a transverse direction (42), and at least one carrier device (44) which rotates during operation and has carrier elements (46) arranged above the cutting devices (2) for conveying the cut crop plants in the transverse direction (42).

16. Harvesting attachment according to claim 15, **characterized in that** the conveying contour (20), in particular the feed portion (24), is at least partially arranged upstream of at least one cutting device (2) of the carrier device (44) in a harvesting direction (48) and extends in particular to below the carrier elements (46).

17. Forage harvester having a harvesting attachment according to claim 15 or 16.

## Revendications

1. Dispositif de coupe (2) pour couper des plantes agricoles utiles par un mouvement de rotation autour d'un axe de rotation de coupe (4) et au moins un élément de couteau (6, 16) qui ouvert en vue de dessus est réalisé sur le dessus (8) du dispositif de coupe (2) dans une direction périphérique (10),
- le dispositif de coupe (2) ayant au moins un élément de transfert radial (12) installé au moins sur le dessus (8) et fixe par rapport à l'élément de couteau (6, 16), qui est réalisé au moins par segments pour transférer les plantes utiles dans une direction de transfert (14) qui est en partie tangente (14.1) par rapport à l'axe de rotation de coupe (4) et en partie radiale (14.2) par rapport à l'axe de rotation de coupe (4),
dispositif **caractérisé en ce que**
l'élément de transfert radial (12) est une zone en moulure du dispositif de coupe (2) en partant d'au moins une zone de hauteur moyenne du dispositif de coupe (2).

2. Dispositif de coupe selon la revendication 1,
**caractérisé en ce que**
l'élément de transfert radial (12) est adjacent à un élément intermédiaire (22) en amont, dans la direction périphérique (10) le long d'un contour de transfert (20),
- le segment de transfert (24) du contour de transfert (20) passant d'un point de transfert neutre (X) partiellement dans la direction périphérique (10) et partiellement dans la direction radiale en s'écartant de l'axe de rotation de coupe (4).

3. Dispositif de coupe selon l'une des revendications précédentes, **caractérisé en ce que**
l'élément de transfert radial (12) et/ou l'élément intermédiaire (22), partant d'au moins une zone de hauteur moyenne du dispositif de coupe (2) est une zone moulurée du dispositif de coupe (2).

4. Dispositif de coupe selon l'une des revendications précédentes, **caractérisé en ce que**
l'épaisseur de matière de l'élément intermédiaire (22), mesurée dans la direction axiale correspond au moins pratiquement à l'épaisseur de matière de l'élément de transfert radial (12), mesurée dans la direction axiale.

5. Dispositif de coupe selon l'une des revendications précédentes, **caractérisé en ce que**
en vue de dessus le segment de transfert rentrant (24) a une forme d'arc de sorte que l'angle de transfert rentrant (α) compris entre une radiale (R) coupant le point de transfert (X) et le segment de transfert rentrant (24) augmente avec le rayon.

6. Dispositif de coupe selon l'une des revendications précédentes, **caractérisé en ce que**
un segment de transfert sortant (34) du contour de transfert (20) s'écarte de l'axe de rotation de coupe (4), en partie à l'opposé de la direction périphérique (10) et en partie dans la direction radiale et notamment entre l'axe de rotation de coupe (4) et le segment de transfert rentrant (24).

7. Dispositif de coupe selon l'une des revendications précédentes, **caractérisé en ce que**
partant d'au moins une zone de hauteur moyenne du dispositif de coupe (2) l'élément intermédiaire (22) est une zone moulurée du dispositif de coupe (2).

8. Dispositif de coupe selon l'une des revendications précédentes, **caractérisé en ce que**
l'élément de transfert radial est au moins par segment en forme de faucille.

9. Dispositif de coupe selon l'une des revendications précédentes, **caractérisé par**
plusieurs éléments de couteaux (6, 16) et un élément de transfert radial (12) est associé à au moins chaque quatrième, de préférence chaque second couteaux (6, 18).

10. Dispositif de coupe selon l'une des revendications précédentes, **caractérisé par**
une réalisation à la fois pour le montage dans une première position de montage dans laquelle il est au moins partiellement orienté dans une première position de montage (8), et aussi pour le montage dans une seconde position de montage dans laquelle le second dessus (18) du dispositif de coupe (2) opposé au premier côté de dessus (8) est au moins en partie orienté vers le haut.

11. Dispositif de coupe selon l'une des revendications 2 à 10, **caractérisé en ce que**
l'élément intermédiaire (22) est adjacent le long d'un contour intermédiaire (30) à une autre élément de transfert radial (12) prévu selon la direction périphérique (10),
en vue de dessus du premier côté (8), le tracé du contour intermédiaire (30) coïncidant notamment avec le tracé du contour de transfert (20).

12. Dispositif de coupe selon l'une des revendications 2 à 11, **caractérisé en ce que**
dans la direction axiale, par rapport au contour intermédiaire (30), le premier dessus (8), a un contour de transfert (20), sur le second dessus (18).

13. Dispositif de coupe selon l'une des revendications précédentes, **caractérisé en ce que**
au moins une partie de tranchant d'un premier élément de couteau (6) est installé, décalé dans la direction axiale par rapport à au moins une partie de tranchant d'un second élément de couteau (16) décalé dans la direction axiale (10).

14. Dispositif de coupe selon l'une des revendications précédentes, **caractérisé par**
au moins une rainure (32) dans la direction périphérique (10) tournant entre l'axe de rotation de coupe (4) et l'élément de transfert radial (12).

15. Accessoire de récolte (40) pour une machine de récolte agricole notamment pour récolter des produits en tiges comprenant un ensemble de dispositifs de coupe (2) montés à rotation selon l'une des revendications précédentes et dont les axes de rotation de coupe (4) sont écartés dans la direction transversale (42) et au moins un dispositif d'entrainement (44) tournant en fonctionnement avec des éléments d'entrainement (46) au-dessus des dispositifs de coupe (2) pour transférer les plantes utiles, coupées, dans la direction transversale (42).

16. Accessoire selon la revendication 15,
**caractérisé en ce que**
le contour de transfert (20) notamment le segment de transfert (24) a au moins un dispositif de coupe (2) avec un dispositif d'entrainement (44) dans une direction de récolte (48), au moins en partie et qui s'étend notamment jusque sous les éléments d'entrainement (46).

17. Hacheur agricole comportant un accessoire de récolte selon la revendication 15 ou 16.
